# EUROPEAN PATENT APPLICATION

(11) **EP 3 650 159 A1**
(43) Date of publication of application: **13.05.2020**
(21) Application number: 18828737.9
(22) Date of filing: 08.06.2018
(51) Int. Cl.: B23K 9/10, B23K 9/095

(54) **WELDING TORCH AND WELDING SYSTEM**

(30) Priority: 04.07.2017 JP 2017130946
(71) Applicant: Daihen Corporation, Osaka-shi, Osaka 532-8512 (JP)
(72) Inventor: IMAMACHI, Hiroki, Osaka-shi Osaka 532-8512 (JP)
(74) Representative: Boult Wade Tennant LLP
(86) International application number: PCT/JP2018/022055
(87) International publication number: WO 2019/009012

(57) **Abstract**

An aspect of the present disclosure provides a welding torch. The welding torch includes a sensor unit, a storage unit, a welding information setting unit, a welding information obtaining unit, and a communication unit. The sensor unit detects inclination information on the welding torch. The storage unit stores information. The welding information setting unit sets welding information in the storage unit in a manner such that the welding information is in association with the inclination information. The welding information obtaining unit obtains, from the storage unit, the welding information corresponding to the inclination information detected by the sensor unit. The communication unit transmits the welding information obtained by the welding information obtaining unit to a welding power supply.

## Description

### TECHNICAL FIELD

The present disclosure relates to a welding torch and a welding system used for arc welding.

### BACKGROUND ART

A welding system using a consumable electrode is generally separated into a welding power supply, a wire feeder, and a welding torch, where the welding power supply is not supposed to be moved due to its weight, whereas the wire feeder and the welding torch are carried by a welder depending on a welding location. In a case where the welding power supply is arranged at a location away from the welding work station, it is not efficient for the welder to go to the location at which the welding power supply is arranged in order to set welding conditions such as welding current. In order to solve the problem, a welding torch with an operation button, which allows for setting welding conditions, has been developed.

For example, at a location where welding is performed on blocks, fillet welding and vertical welding may be performed in a single process. In this case, welding conditions for the fillet welding and welding conditions for the vertical welding are set in advance. Then, when the fillet welding is switched to the vertical welding, the welding conditions are changed by operating the operation button at hand.

### SUMMARY OF THE INVENTION

However, operating the operation button while performing welding may cause a welding defect due to hand shaking. Furthermore, it is cumbersome to operate the operation button carefully to avoid hand shaking while performing welding.

The present disclosure has been conceived under the foregoing circumstances and an object thereof is to provide a more favorable welding torch. For example, the present disclosure aims to provide a welding torch capable of reducing an operation burden on an operator, and a welding system including the welding torch.

According to a first aspect of the present disclosure, a welding torch is provided. The welding torch includes a sensor unit, a storage unit, a welding information setting unit, a welding information obtaining unit, and a communication unit. The sensor unit detects inclination information on the welding torch. The storage unit stores information. The welding information setting unit sets welding information in the storage unit in a manner such that the welding information is in association with the inclination information. The welding information obtaining unit obtains, from the storage unit, the welding information corresponding to the inclination information detected by the sensor unit. The communication unit transmits the welding information obtained by the welding information obtaining unit to a welding power supply.

The "inclination information" indicates the degree of the inclination of the welding torch, and may correspond to an angle indicating how much a predetermined axis of the welding torch is inclined to a reference direction such as the vertical direction. The "welding information" is information for controlling welding. Specifically, the "welding information" is parameter values for controlling the welding power outputted by the welding power supply or a number that indicates a set of such parameter values. For example, when the welding power supply performs DC output, parameter values, such as a welding current set value, a welding voltage set value, and a current rise change rate at short circuit, correspond to the welding information. When the welding power supply performs pulse output, parameter values, such as the base current set value of a pulse, a peak current set value, a low-level period, a high-level period, a pulse frequency, the duty ratio of a pulse, and the rising and falling slopes of a pulse, correspond to the welding information. When the welding power supply performs AC output, parameter values, such as an AC frequency and the ratio of the time during which the welding torch is at positive polarity, correspond to the welding information. Furthermore, a welding condition number indicating a welding condition with a plurality of parameter values also corresponds to the welding information.

According to a second aspect of the present disclosure, a welding system is provided. The welding system includes the welding torch provided according to the first aspect of the present disclosure, and the welding power supply. The welding power supply includes a power supply storage unit and an obtaining unit. The power supply storage unit stores correspondence between the welding condition and the welding condition number. The obtaining unit obtains the welding condition corresponding to the welding condition number received from the welding torch.

According to a third aspect of the present disclosure, a welding system is provided. The welding system includes the welding torch provided according to the first aspect of the present disclosure, a wire feeder, and the welding power supply. The wire feeder feeds a welding wire to the welding torch. The communication unit transmits the welding condition number to the wire feeder. The wire feeder includes a feeder storage unit, an obtaining unit, and a feeder communication unit. The feeder storage unit stores correspondence between the welding condition and the welding condition number. The obtaining unit obtains the welding condition corresponding to the welding condition number received from the welding torch. The feeder communication unit transmits the welding condition obtained by the obtaining unit to the welding power supply.

Other features and advantages of the present disclosure will become apparent from the detailed description given below with reference to the accompanying drawings.

### BRIEF DESCRIPTION OF THE DRAWINGS

Fig. 1A is a schematic view illustrating the overall configuration of a welding system according to a first embodiment;
Fig. 1B is a block diagram illustrating the functional configuration of the welding system according to a first embodiment;
Fig. 2A is a front view illustrating an example of the welding torch according to the first embodiment;
Fig. 2B is a plan view illustrating an example of the welding torch according to the first embodiment;
Fig. 3A shows the relationship between the postures of the welding torch and torch inclination angles;
Fig. 3B shows an example of a welding condition number table;
Fig. 4 is a flowchart for describing a welding information setting process;
Fig. 5A shows an example of the display screen of guidance for inputting a set angle;
Fig. 5B shows an example of the display screen of guidance for selecting a welding condition number;
Fig. 6 is a flowchart for describing a welding information obtaining process;

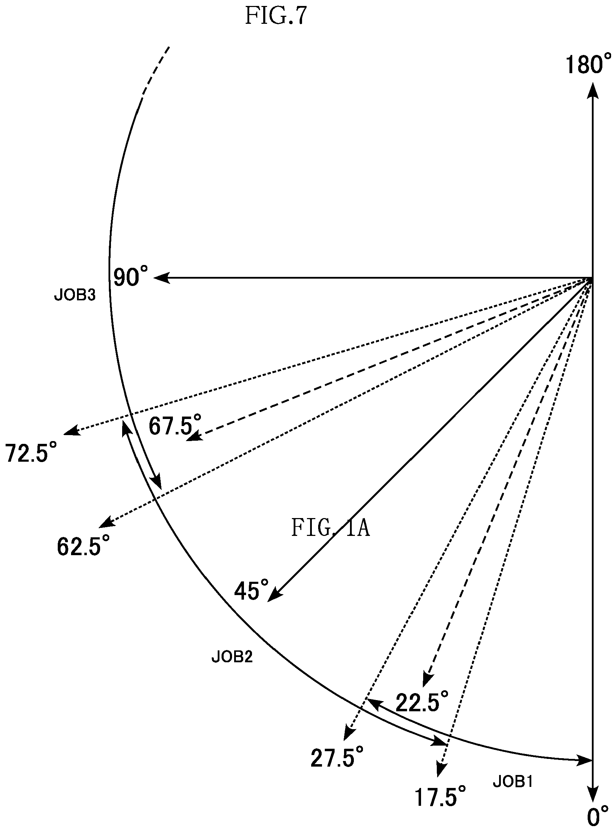

Fig. 7 illustrates the relationship between set angles and torch inclination angle ranges when changing of welding condition numbers has hysteresis characteristics;
Fig. 8 is a block diagram illustrating the functional configuration of a welding system according to a second embodiment; and
Fig. 9 is a block diagram illustrating the functional configuration of a welding system according to a third embodiment.

### MODE FOR CARRYING OUT THE INVENTION

Embodiments of the present disclosure are described below with reference to the drawings, taking as an example the case where the present disclosure is applied to a welding torch (welding system).

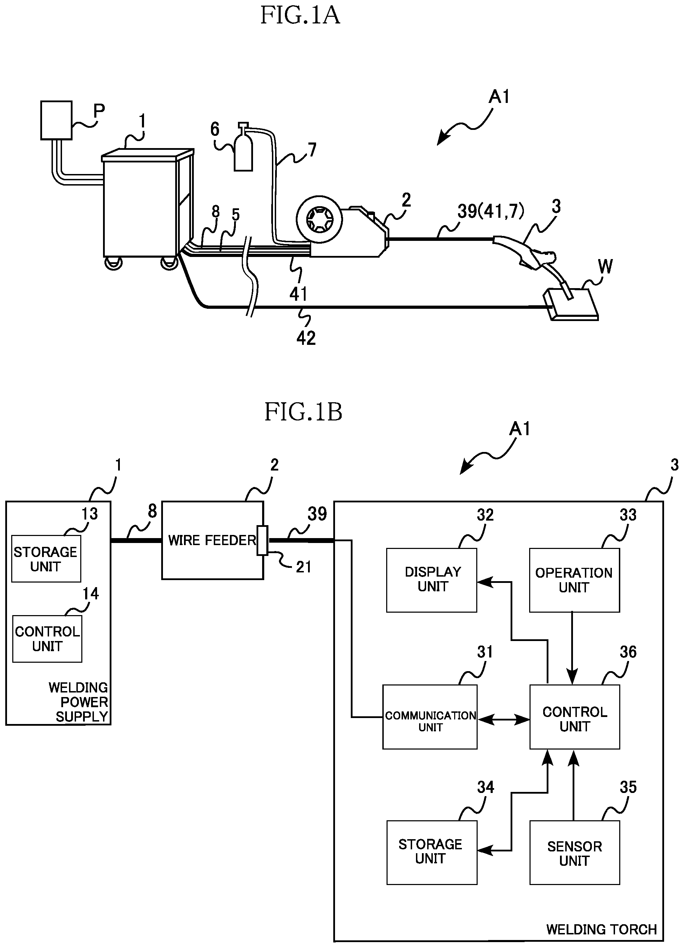

Figs. 1A-1B are views for describing a welding system A1 according to a first embodiment. Fig. 1A is a schematic view illustrating the overall configuration of the welding system A1. Fig. 1B is a block diagram illustrating the functional configuration of the welding system A1.

As shown in Figs. 1A-1B, the welding system A1 includes a welding power supply 1, a wire feeder 2, a welding torch 3, power cables 41 and 42, a power transmission line 5, a signal line 8, a gas cylinder 6, and a gas pipe 7. One of the output terminals of the welding power supply 1 is connected to the welding torch 3 via the power cable 41. The wire feeder 2 feeds a wire electrode to the welding torch 3 to cause the extremity of the wire electrode to project from the extremity of the welding torch 3. The power cable 41 and the wire electrode are electrically connected to each other at a contact tip disposed at the extremity of the welding torch 3. The other output terminal of the welding power supply 1 is connected to a workpiece W via the power cable 42. The welding power supply 1 causes an arc to be generated between the extremity of the wire electrode projecting from the extremity of the welding torch 3 and the workpiece W, and supplies electric power to the arc. The welding system A1 uses the heat of the arc to weld the workpiece W.

The welding system A1 uses shielding gas during welding. The shielding gas in the gas cylinder 6 is supplied via the gas pipe 7 extending through the wire feeder 2 to the extremity of the welding torch 3. Electric power (e.g., DC 24V) for driving a feed motor, for example, is supplied from the welding power supply 1 to the wire feeder 2 via the power transmission line 5. The welding power supply 1 and the wire feeder 2 are in communication with each other via the signal line 8. In the welding system A1, cooling water may be circulated through the welding torch 3.

The welding power supply 1 supplies electric power for arc welding to the welding torch 3. The welding power supply 1 converts the three-phase AC power inputted from an electric power system P into electric power appropriate for arc welding and outputs the electric power. The welding power supply 1 also converts the three-phase AC power inputted from the electric power system P into DC power for driving the feed motor of the wire feeder 2, for example, and outputs the DC power to the wire feeder 2 via the power transmission line 5.

The welding power supply 1 is controlled to output electric power in accordance with a welding condition. Each parameter value of the welding condition is changed in accordance with the operation of an operation unit (not shown). The welding power supply 1 associates welding conditions suitable for welding operations, such as normal welding, fillet welding, and vertical welding, with numbers indicating the welding operations (welding condition numbers), and stores the associated welding conditions and numbers as a welding condition table in a storage unit 13. A control unit 14 of the welding power supply 1 reads, from the storage unit 13, a welding condition corresponding to a welding condition number inputted from the welding torch 3 via the signal line 8, and performs control in accordance with the welding condition thus read. In the present embodiment, the storage unit 13 corresponds to an example of the "power supply storage unit", and the control unit 14 corresponds to an example of the "obtaining unit".

The wire feeder 2 feeds the wire electrode to the welding torch 3. The wire electrode is guided to the extremity of the welding torch 3 by passing through a liner provided in a torch cable 39 and the welding torch 3. The wire feeder 2 uses the electric power supplied from the welding power supply 1 via the power transmission line 5 to drive the feed motor or the like. The electric power is also supplied from the wire feeder 2 to the welding torch 3 via a power transmission line (not shown) provided in the torch cable 39. The wire feeder 2 communicates with the welding power supply 1 via the signal line 8. The wire feeder 2 also communicates with the welding torch 3 via a signal line (now shown) provided in the torch cable 39. The welding torch 3 and the welding power supply 1 communicate with each other by way of the wire feeder 2.

The wire feeder 2 and the welding torch 3 are connected to each other via the torch cable 39. The torch cable 39 is a cable connected to a base end of the welding torch 3 and contains therein the power cable 41, the gas pipe 7, the liner, the power transmission line, and the signal line.

A connector 21 is a connection terminal for connecting the welding torch 3 and the wire feeder 2 to each other. For example, the connector 21 is a recessed connection terminal, and receives a projecting torch plug (not shown) provided at an end of the torch cable 39 of the welding torch 3 to connect the welding torch 3 and the wire feeder 2. The connector 21 connects the power cable 41, the gas pipe 7, the liner, the power transmission line 5 and the signal line 8 in the wire feeder 2 to the power cable 41, the gas pipe 7, the liner, the power transmission line and the signal line in the torch cable 39, respectively.

The welding torch 3 welds the workpiece W by using the welding power supplied from the welding power supply 1. The welding torch 3 includes, as functional blocks, a communication unit 31, a display unit 32, an operation unit 33, a storage unit 34, a sensor unit 35 and a control unit 36.

The communication unit 31 is provided for performing communication with the wire feeder 2. The communication unit 31 transmits a signal inputted from the control unit 36 to the wire feeder 2 via the signal line in the torch cable 39. The communication unit 31 also receives a signal inputted from the wire feeder 2 via the signal line in the torch cable 39, and outputs the signal to the control unit 36. As a communication standard, a controller area network (CAN) may be used, for example.

The display unit 32 performs various types of display, and includes a display device 321 (described later) that may be a liquid crystal display device. The display unit 32 is controlled by the control unit 36 and displays various types of information.

The operation unit 33 includes a plurality of operation means, and outputs an operation signal to the control unit 36 as each operation means is operated by an operator. The operation means may include a torch switch 331 and operation buttons 332 as described later. The operation unit 33 may include other operation means.

The storage unit 34 stores various types of information. In the present embodiment, the storage unit 34 stores a welding condition number table indicating the correspondence between pieces of inclination information, each of which indicates an inclination of the welding torch 3, and welding condition numbers. The welding condition number table is described later in detail.

The sensor unit 35 includes a plurality of sensors, and outputs values detected by the sensors to the control unit 36. In the present embodiment, the sensor unit 35 includes an acceleration sensor 351 that is described later. The sensor unit 35 may include other sensors.

The control unit 36, which controls the welding torch 3, is embodied by a microcomputer, for example. The control unit 36 performs predetermined processing in response to an operation signal inputted from the operation unit 33. The control unit 36 also controls communication by the communication unit 31, writing or reading of information into or out of the storage unit 34 and display by the display unit 32. The control unit 36 also performs predetermined computation based on the detected values inputted from the sensor unit 35, and uses the computation results for processing. Specifically, the control unit 36 computes inclination information on the welding torch 3 based on the values detected by the acceleration sensor 351. The control unit 36 also reads the welding condition number corresponding to the inclination information from the welding condition number table in the storage unit 34. The process for reading the welding condition number corresponding to the inclination information is described later in detail. The control unit 36 also associates pieces of inclination information with welding condition numbers, and generates the welding condition number table for the storage unit 34. The process for associating the pieces of inclination information with the welding condition numbers is described later in detail. The welding condition numbers correspond to an example of the "welding information".

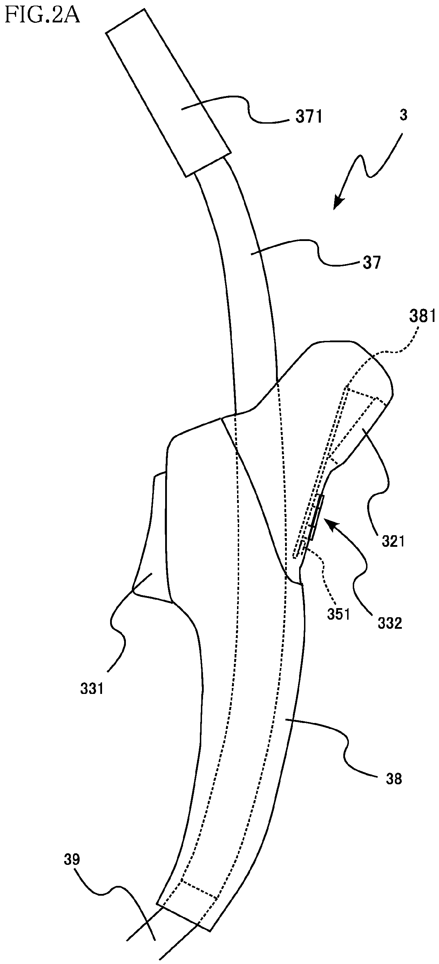

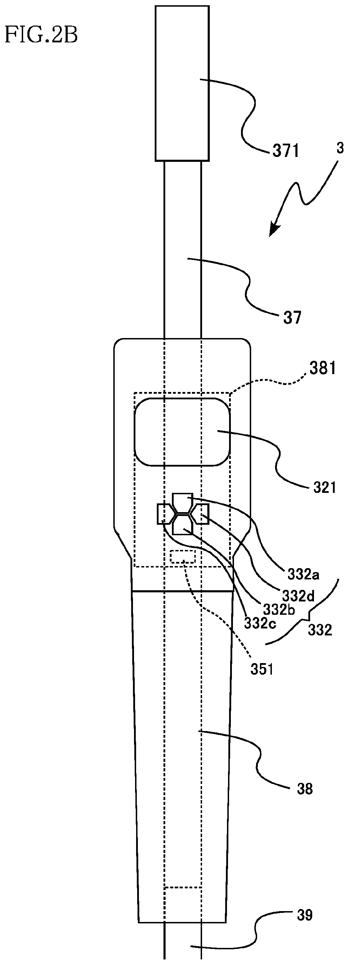

Figs. 2A-2B show the appearance of an example of the welding torch 3. Fig. 2A is a front view, and Fig. 2B is a plan view. As shown in Figs. 2A-2B, the welding torch 3 includes a torch body 37, a handle 38, a control board 381, a torch switch 331, operation buttons 332, a display device 321, an acceleration sensor 351, and a torch cable 39.

The torch body 37 is a metal cylindrical member, and contains therein the liner, through which a welding cable is passed, the power cable 41, and the gas pipe 7. A nozzle 371 is attached to the extremity of the torch body 37. The torch body 37 has a curved portion for allowing an operator to easily direct the nozzle 371 toward the workpiece W.

The handle 38 is to be gripped by an operator and supports the base end of the torch body 37. The operator performs a welding operation while gripping the handle 38. The torch switch 331, the operation buttons 332 and the display device 321 are arranged at the handle 38. The control board 381 is arranged inside the handle 38. On the control board 381 are mounted a circuit that constitutes the communication unit 31, the display unit 32, the operation unit 33, the storage unit 34, the sensor unit 35 and the control unit 36.

The torch switch 331 is an operation means for receiving the welding start/stop operation and arranged at a location that allows the operator gripping the handle 38 to easily press with his/her forefinger. When the torch switch 331 is switched on (pressed), an operation signal is outputted to the control unit 36. When the operation signal is inputted to the welding power supply 1, the welding power supply 1 outputs welding power. When the torch switch 331 is switched off, the welding power supply 1 stops outputting the welding power. That is, welding is performed only when the torch switch 331 is pressed.

The display device 321 performs various displays and is arranged on a side of the handle 38 that is opposite from the torch switch 331 so that the operator performing the welding operation while gripping the handle 38 can easily see the display device.

The operation buttons 332, which are operation means for switching screens or changing various set values, are arranged on the side of the handle 38 on which the display device 321 is arranged and between the grip portion of the handle 38 and the display device 321. The operation buttons 332 include an upper button 332a, a lower button 332b, a left button 332c and a right button 332d. When any of the buttons 332a-332d is pressed, a corresponding operation signal is outputted to the control unit 36, and the control unit 36 performs the relevant processing. The buttons 332a-332d are operation means for switching the screens displayed on the display device 321 and changing the set values displayed on the display device 321. In the present embodiment, the right button 332d also functions as an operation means (enter key) for instructing an input.

A sensor for detecting the pressing of the operation buttons 332 is mounted on the control board 381. The display device 321 is also disposed on the same control board 381. In the present embodiment, the screen of the display device 321 has a predetermined angle with respect to the control board 381 so that the operator can easily operate the operation buttons 332 while looking at the screen of the display device 321. Note however that the display device 321 may be arranged with its screen in parallel with the control board 381. On the control board 381 are also mounted a microcomputer as the control unit 36, a memory as the storage unit 34, a communication module as the communication unit 31, and various other electronic components. The acceleration sensor 351 is also mounted on the control board 381.

The acceleration sensor 351, which is a three-axis acceleration sensor, detects the acceleration in each axial direction, and outputs the detected values to the control unit 36. The control unit 36 computes inclination information on the welding torch 3, based on the detected values inputted from the acceleration sensor 351 of the sensor unit 35. The acceleration sensor 351 detects acceleration in the axial direction of each of the three mutually orthogonal axes set in the sensor itself. Based on the detected acceleration, the control unit 36 computes acceleration in the axial direction of each of the three mutually orthogonal axes set in the welding torch 3. In the present embodiment, the axis extending in the orientation of the extremity of the welding torch 3 (i.e., the central axis of the nozzle 371) is defined as one axis (hereinafter, "z axis"). The control unit 36 computes the angle (hereinafter, "torch inclination angle") formed between the orientation toward the extremity of the welding torch 3 in the z axial direction and the vertically downward direction (the orientation in which the gravitational acceleration acts), from the computed acceleration in each axial direction of the welding torch 3. The method for computing the torch inclination angle by the control unit 36 is not limited. In the present embodiment, parts of the acceleration sensor 351 and the control unit 36 correspond to an example of the "sensor unit", and the "torch inclination angle" corresponds to an example of the "inclination information". Note that the sensor unit 35 may include a gyro sensor instead of the acceleration sensor 351. In this case, the control unit 36 computes a torch inclination angle from the angular velocity about each axis detected by the gyro sensor.

The appearance of the welding torch 3 is not limited to that described above. For example, the positions and shapes of the torch switch 331, the operation buttons 332, and the display device 321 are not limited. Although the operation buttons 332 in the present embodiment are four separate buttons, the operation buttons may be a single cross button. Also, the number of buttons is not limited.

The following describes the "welding information setting process", which is a process for associating inclination information with a welding condition number, and the "welding information obtaining process", which is a process for reading the welding condition number associated with the inclination information.

The control unit 36 computes a torch inclination angle based on the detected values inputted from the acceleration sensor 351. The torch inclination angle is the angle formed between the orientation of the extremity of the welding torch 3 (i.e., orientation of the nozzle 371) and the vertically downward direction, and represents the angle of the inclination of the extremity of the welding torch 3 relative to the vertically downward direction.

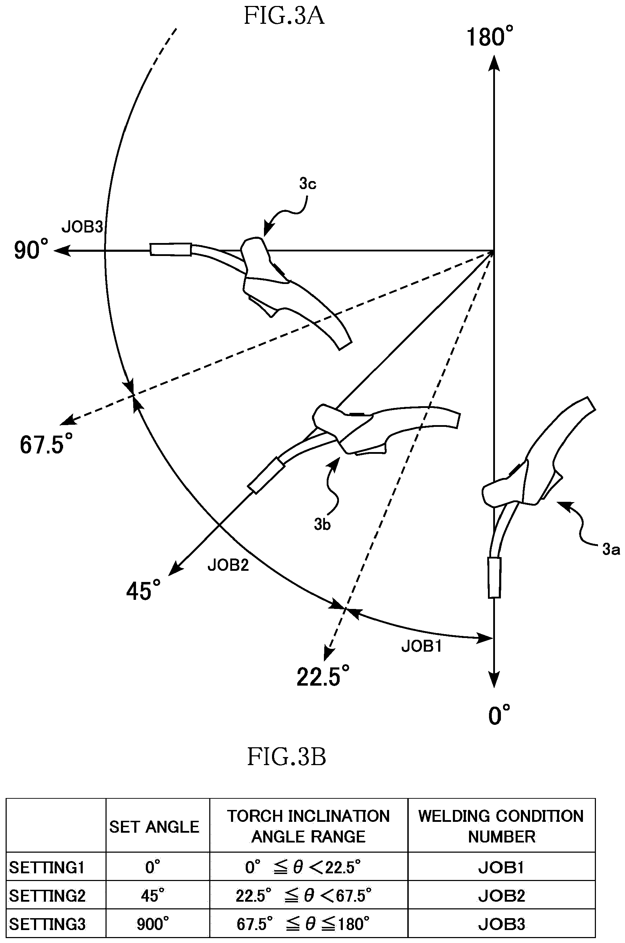

Fig. 3A illustrates the relationship between the postures of the welding torch 3 and torch inclination angles. In Fig. 3A, solid arrows indicate that the vertically downward direction is the reference "0°" and the vertically upward direction is "180°". A welding torch 3a shows that the extremity thereof is directed in the vertically downward direction. In this case, the orientation of the extremity of the welding torch 3a coincides with the vertically downward direction, and therefore the torch inclination angle is "0°". A welding torch 3c shows that the extremity thereof is directed in a horizontal direction. In this case, the orientation of the extremity of the welding torch 3c is orthogonal to the vertically downward direction, and therefore the torch inclination angle is "90°". A welding torch 3b shows that the orientation of the extremity thereof is inclined 45° relative to the vertically downward direction, and therefore the torch inclination angle is "45°".

Fig. 3B shows an example of the welding condition number table stored in the storage unit 34. The welding condition number table indicates the correspondence between the torch inclination angles and the welding condition numbers. In the welding condition number table shown in Fig. 3B, the torch inclination angle θ in the range of 0° ≤ θ < 22.5° is associated with a welding condition number "JOB 1" (setting 1), the torch inclination angle θ in the range of 22.5° ≤ θ < 67.5° is associated with a welding condition number "JOB 2" (setting 2), the torch inclination angle θ in the range of 67.5° ≤ θ ≤ 180° is associated with a welding condition number "JOB 3" (setting 3). The above correspondence is set by the operator.

The operator performs a predetermined operation to cause the display device 321 to display a menu screen. The menu screen shows a plurality of options. The operator can press the upper button 332a or the lower button 332b to move a cursor and press the right button 332d to select a desired option from among the plurality of options. The display device 321 displays a submenu screen corresponding to the selected option. The operator can select a desired option from the submenu screen in the same manner as described above so as to cause a desired screen to be displayed. When the operator selects a welding information setting mode through an operation on the menu screen, the welding information setting process is started. The method for selecting the welding information setting mode is not limited. For example, the upper button 332a or the lower button 332b may be pressed to cause the display device 321 to sequentially display, on the display device 321, each of the options including the welding information setting mode. When the display device 321 displays the welding information setting mode on the screen, the right button 332d may be pressed to select the welding information setting mode.

In the welding information setting mode, the operator holds the welding torch 3 in a desired posture, sets the torch inclination angle at this point to a set angle in the welding condition number table. Then, the operator sets a welding condition number by selecting the welding condition number and associating the welding condition number with the set angle. For example, the operator holds the welding torch 3 in the posture of the welding torch 3a as shown in Fig. 3A, and sets the set angle of setting 1 to "0°" and the welding condition number to "JOB 1". Similarly, the operator holds the welding torch 3 in the posture of the welding torch 3b, and sets the set angle of setting 2 to "45°" and the welding condition number to "JOB 2". Furthermore, the operator holds the welding torch 3 in the posture of the welding torch 3c, and sets the set angle of setting 3 to "90°" and the welding condition number to "JOB 3". The torch inclination angle range in each setting in the welding condition number table is automatically calculated in accordance with the set angle in each setting. Specifically, the intermediate value between the set angle "0°" in setting 1 and the set angle "45°" in setting 2, i.e., "22.5° (= (0° + 45°) ÷ 2), is set as the boundary value between the torch inclination angle ranges of settings 1 and 2. Also, the intermediate value between the set angle "45°" in setting 2 and the set angle "90°" in setting 3, i.e., "67.5° (= (45° + 90°) ÷ 2), is set as the boundary value between the torch inclination angle ranges of settings 2 and 3. The torch inclination angle range is set in the range of 0° ≤ θ ≤ 180°. Hence, the torch inclination angle range in setting 1 is set to 0° ≤ θ < 22.5°, the torch inclination angle range in setting 2 to 22.5° ≤ θ < 67.5°, and torch inclination angle range in setting 3 to 67.5° ≤ θ ≤ 180° (see Fig. 3B).

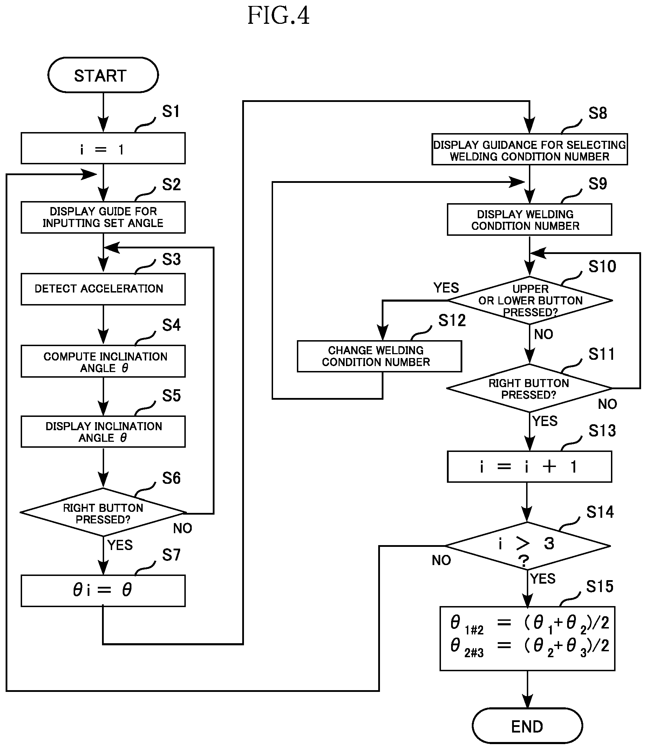

Fig. 4 is a flowchart for describing the welding information setting process performed by the control unit 36. The process begins when the welding information setting mode is selected. The flowchart describes the case where three set angles are set. In the present embodiment, the control unit 36 corresponds to an example of the "welding information setting unit".

First, an initial value "1" is input to the variable i that indicates a setting number (S1). Next, a guide for inputting a set angle is displayed on the display device 321 (S2). Specifically, the control unit 36 outputs, to the display unit 32, an instruction for displaying the guide for inputting a set angle. In response to the instruction, the display unit 32 causes the display device 321 to display the guide for inputting a set angle. Next, acceleration information is detected (S3), and the torch inclination angle θ is computed (S4). Specifically, the control unit 36 obtains the acceleration values for the three axes detected by the acceleration sensor 351, and computes the acceleration in the axial direction of each of the three axes set in the welding torch 3. Thereafter, the torch inclination angle θ is computed from the computed acceleration. Next, the torch inclination angle θ is displayed on the display device 321 (S5). Specifically, the control unit 36 outputs the torch inclination angle θ to the display unit 32. The display unit 32 causes the display device 321 to display the inputted torch inclination angle θ. Then, whether or not the right button 332d has been pressed is determined (S6). Specifically, the determination is made as to whether or not an operation signal indicating that the right button 332d has been pressed is inputted from the operation unit 33 is determined. When the right button 332d has not been pressed (S6: NO), the process returns to step S3. Steps S3 to S6 are then repeated, and the torch inclination angle θ is updated and displayed. When the right button 332d has been pressed (S6: YES), the torch inclination angle θ at this point is inputted as the set angle of setting i (S7).

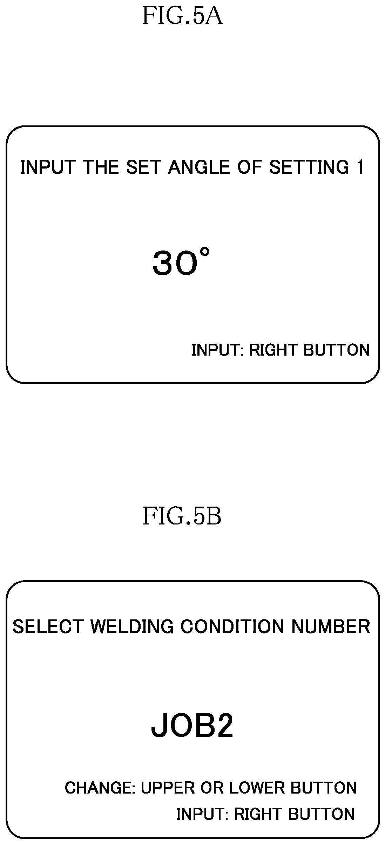

Fig. 5A shows an example of the display screen of guidance for inputting a set angle. The top of the screen displays guidance for prompting the input of a set angle. The center of the screen displays the torch inclination angle θ. As the operator changes the posture of the welding torch 3, the display of the torch inclination angle θ varies accordingly. The lower right of the screen displays guidance notifying that the right button 332d is an input button. The operator changes the posture of the welding torch 3, and presses the right button 332d when the welding torch 3 is in a desired posture. The set angle of the setting i is thereby set in the welding condition number table.

Next, guidance for selecting a welding condition number is displayed on the display device 321 (S8), and the welding condition number of the setting i is displayed on the display device 321 (S9). The welding condition number is read from the welding condition number table. Note that the initial value of the welding condition number is set to "JOB 1", for example. Next, whether or not the upper button 332a or the lower button 332b has been pressed is determined (S10). When neither the upper button 332a nor the lower button 332b has been pressed (S10: NO), whether or not the right button 332d has been pressed is determined (S11). When the right button 332d has not been pressed (S11: NO), the process returns to step S10 and steps S10-S11 are repeated. In other words, the process waits for any of the upper button 332a, the lower button 332b, and the right button 332d to be pressed. When either the upper button 332a or the lower button 332b has been pressed in step S10 (S10: YES), the welding condition number of the welding condition number table is changed (S12), and the process returns to step S9. For example, when the upper button 332a is pressed, the welding condition number changes in order of "JOB 1", "JOB 2", and "JOB 3", and then returns to "JOB 1". When the lower button 332b is pressed, the welding condition number is changed in order of "JOB 3", "JOB 2", and "JOB 1", and then returns to "JOB 3". When the right button 332d has been pressed in step S11 (S11: YES), the welding condition number is confirmed and the process proceeds to step S13.

Fig. 5B shows an example of the display screen of the guidance for selecting a welding condition number. The top of the screen displays guidance for prompting the selection of a welding condition number. The center of the screen displays the current welding condition number. The display of the welding condition number varies in accordance of the pressing of either the upper button 332a or the lower button 332b by the operator. The lower right of the screen displays guidance notifying that the right button 332d is an input button, and that either the upper button 332a or the lower button 332b can be used to change the welding condition number. The operator changes the welding condition number by pressing either the upper button 332a or the lower button 332b, and presses the right button 332d when the welding condition number is changed to a desired welding condition number. The welding condition number at this point is set as the welding condition number of the setting i.

Next, the variable i is incremented by "1" (S13), and whether or not the variable i is larger than 3 is determined (S14). When the variable i is not greater than 3 (S14: NO), the process returns to step S2. When the variable i is greater than 3 (S14: YES), the process proceeds to step S15. That is, the process of steps S2-S13 is repeated three times. In step S15, the boundary value θ_{1#2} between the torch inclination angle ranges of settings 1 and 2 is calculated, the boundary value θ₂#₃ between the torch inclination angle ranges of settings 2 and 3 is calculated, and the torch inclination angle range of each setting in the welding condition number table is set. Thereafter, the welding information setting process is ended. If the set angle is not set to increase in order of setting 1, setting 2 and setting 3, data pieces are switched around so as to be in this order. Note that a limitation may be imposed when a set angle is input. In this case, if the torch inclination angle θ is not set in the above order even when the right button 332d is pressed in step S6 shown in Fig. 4, a message may be displayed to indicate that the input angle is inappropriate, and the process may return to step S3.

The process shown in the flowchart of Fig. 4 is merely an example, and the welding information setting process performed by the control unit 36 is not limited to that described above. Although three set angles are set in the flowchart of Fig. 4, the number of set angles is not limited. For example, the number of set angles may be two, or may be greater than or equal to four. Alternatively, the operator may select the number of set angles. In this case, guidance for selecting the number of set angles may be displayed before step S1 in the flowchart of Fig. 4, and the operator may in turn select the number. Alternatively, the number may be set in advance in a set mode different from the welding information setting mode. Alternatively, the number of set angles may not be set in advance. Instead, the process may be ended when the number of set angles reaches the number desired by the operator during the welding information setting process. In this case, an inquiry can be made as to whether the operator desires to end or continue the process, instead of comparing the number of the variable i in step S14 in the flowchart shown in Fig. 4.

During the welding operation, the control unit 36 reads, from the welding condition number table, the welding condition number corresponding to the detected torch inclination angle θ. In the case of Fig. 3, the control unit 36 reads "JOB 1" when the torch inclination angle θ is in the range of 0° ≤ θ < 22.5°, "JOB 2" when the torch inclination angle θ is in the range of 22.5° ≤ θ < 67.5°, and "JOB 3" when the torch inclination angle θ is in the range of 67.5° ≤ θ ≤ 180°. The control unit 36 outputs the read welding condition number to the communication unit 31 and lets the welding power supply 1 transmit the welding condition number. The welding power supply 1 controls the welding power under the welding condition corresponding to the received welding condition number. This allows for performing an welding operation under the welding condition corresponding to the welding condition number associated with the torch inclination angle θ.

In the present embodiment, the information on the torch inclination angle θ may be displayed on the display device 321. Specifically, the control unit 36 outputs the torch angle θ obtained by computation to the display unit 32. The display unit 32 displays the information based on the inputted torch inclination angle θ on the display device 321. The torch inclination angle θ may be displayed as is. Instead, an image of the torch may be displayed so that the inclination of the displayed torch may be changed in accordance with the torch inclination angle θ. The operator can learn the torch inclination angle θ by looking at the display device 321, and can objectively recognize how much the welding torch 3 is inclined. In the present embodiment, the welding condition number corresponding to the torch inclination angle θ is also displayed on the display device 321. The operator can learn the current welding condition number by looking at the display device 321, thereby understanding which welding condition is currently employed to perform a welding operation.

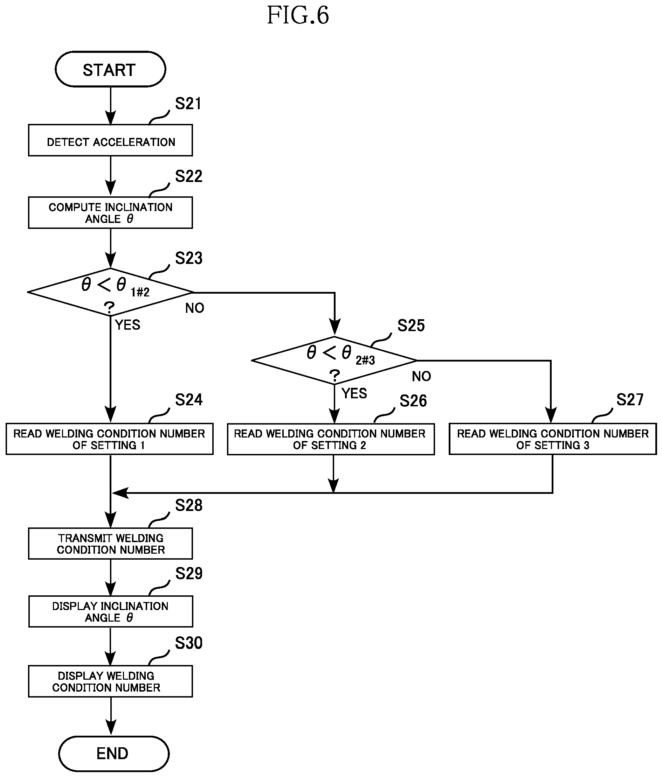

Fig. 6 is a flowchart for describing the welding information obtaining process performed by the control unit 36. The process is repeatedly performed at predetermined time intervals during the welding operation (while the torch switch 331 is pressed). The flowchart describes the case where three set angles are set. In the present embodiment, the control unit 36 corresponds to an example of the "welding information obtaining unit".

First, acceleration information is detected (S21), and the torch inclination angle θ is computed (S22). Specifically, the control unit 36 obtains the acceleration values for the three axes detected by the acceleration sensor 351, and computes the acceleration in the axial direction of each of the three axes set in the welding torch 3. Thereafter, the torch inclination angle θ is computed from the computed acceleration.

Next, a welding condition number is read based on the torch inclination angle θ (S23-S27). First, whether or not the torch inclination angle θ is less than the boundary value θ_{1#2} between the torch inclination angle ranges of settings 1 and 2 is determined (S23). When the torch inclination angle θ is less than the boundary value θ_{1#2} (S23: YES), the welding condition number of setting 1 is read because the torch inclination angle θ corresponds to setting 1 in the welding condition number table (S24). When the torch inclination angle θ is not less than the boundary value θ_{1#2} (S23: NO), whether or not the torch inclination angle θ is less than the boundary value θ_{2#3} between the torch inclination angle ranges of settings 2 and 3 is determined (S25). When the torch inclination angle θ is less than the boundary value θ_{2#3} (S25: YES), the welding condition number of setting 2 is read because the torch inclination angle θ corresponds to setting 2 in the welding condition number table (S26). When the torch inclination angle θ is not less than the boundary value θ_{2#3} (S25: NO), the welding condition number of setting 3 is read because the torch inclination angle θ corresponds to setting 3 in the welding condition number table (S27) .

Next, the read welding condition number is transmitted to the welding power supply 1 (S28). Specifically, the control unit 36 outputs the read welding condition number to the communication unit 31. The communication unit 31 transmits the welding condition number to the welding power supply 1. The welding power supply 1 controls the welding power under the welding condition corresponding to the received welding condition number. This allows for performing a welding operation under the welding condition corresponding to the welding condition number associated with the torch inclination angle θ.

Next, information on the torch inclination angle θ is displayed on the display device 321 (S29). Specifically, the control unit 36 outputs the torch inclination angle θ to the display unit 32. The display unit 32 displays the information based on the inputted torch inclination angle θ on the display device 321. Then, the welding condition number is displayed on the display device 321 (S30), and the welding information obtaining process is ended. Specifically, the control unit 36 outputs the read welding condition number to the display unit 32. The display unit 32 causes the display device 321 to display the inputted welding condition number.

The process shown in the flowchart of Fig. 6 is merely an example, and the welding information obtaining process performed by the control unit 36 is not limited to that described above. The process for reading a welding condition number (S23-S27) varies depending on the number of settings (i.e., the number of set angles) in the welding condition number table.

According to the present embodiment, the torch inclination angle θ is computed based on the detected values inputted from the acceleration sensor 351. The control unit 36 reads a welding condition number from the welding condition number table based on the computed torch inclination angle θ. The read welding condition number is transmitted to the welding power supply 1 via the communication unit 31. The welding power supply 1 controls the welding power under the welding condition corresponding to the received welding condition number. This allows for performing a welding operation under the welding condition corresponding to the welding condition number associated with the posture of the welding torch 3. Since the operator can reduce or eliminate the necessity of operating the operation buttons 332 of the welding torch 3 during welding, the operation burden on the operator can be reduced.

Furthermore, according to the present embodiment, the welding condition number table can be set by the operator in the welding information setting mode. Accordingly, the operator can freely set the correspondence between the torch inclination angle θ and the welding condition, based on his/her own experience. In the present embodiment, the operator holds the welding torch 3 in a desired posture in the welding information setting mode, and automatically sets the torch inclination angle θ at this point to a set angle. As such, the operator can intuitively set a set angle without recognizing the actual torch inclination angle θ. Furthermore, in the present embodiment, the boundary values between the torch inclination angle ranges in the welding condition number table are automatically calculated from the set angles. This eliminates the need of inputting the torch inclination angle ranges. Furthermore, since the intermediate values between the set angles are set as the boundary values, the welding condition corresponding to the set angle closest to the torch inclination angle θ is applied. Thus, an odd feeling toward the applied welding condition is less likely to occur.

According to the present embodiment, information on the torch inclination angle θ is displayed on the display device 321. Thus, the operator can learn the torch inclination angle θ by looking at the display device 321, and can objectively recognize how much the welding torch 3 is inclined. According to the present embodiment, the welding condition number corresponding to the torch inclination angle θ is also displayed on the display device 321. Thus, the operator can learn the current welding condition number by looking at the display device 321, thereby understanding which welding condition is currently employed to perform a welding operation.

Although the present embodiment describes the case where the welding current set value is changed based on the torch inclination angle θ, which is computed by the control unit 36 from the values detected by the acceleration sensor 351, the present disclosure is not limited to such. For example, the welding current set value may be changed based on the acceleration detected by the acceleration sensor 351. In this case, the acceleration sensor 351 corresponds to an example of the "sensor unit", and the acceleration in each axial direction detected by the acceleration sensor 351 corresponds to an example of the "inclination information".

Although the present embodiment describes the case where the torch inclination angle θ is an angle between the orientation of the extremity of the welding torch 3 and the vertically downward direction, the present disclosure is not limited to such. The torch inclination angle θ may be set in a manner different from the manner described above. It is sufficient as long as the torch inclination angle θ is an angle formed between a reference direction based on gravity and a direction for indicating the posture of the welding torch 3. For example, the torch inclination angle θ may be an angle formed between the orientation of the extremity of the welding torch 3 and a horizontal direction. In this case, for example, when the extremity of the welding torch 3 is directed downward from the horizontal direction, the torch inclination angle θ may be set to take a negative value. In this way, the torch inclination angle θ is "0°" when the extremity of the welding torch 3 is directed in the horizontal direction, the torch inclination angle θ is "+90°" when the extremity of the welding torch 3 is directed upward in the vertical direction, and the torch inclination angle θ is "-90°" when the extremity of the welding torch 3 is directed downward in the vertical direction.

In the present embodiment, a welding condition number is changed when the torch inclination angle θ exceeds the boundary value of a torch inclination angle range in the welding condition number table. However, changing of a welding condition number may have hysteresis characteristics. That is, a hysteresis range (a range in which a welding condition number is changed depending on a past torch inclination angle θ) may be provided at the boundary between each pair of torch inclination angle ranges of the settings. In the example of Fig. 3, let the hysteresis range be ±5° of a set angle. Then, when the torch inclination angle θ increases, the welding condition number is set to "JOB 1" until the torch inclination angle θ reaches 27.5° (22.5° (boundary value θ_{1#2}) + 5°), and to "JOB 2" until the torch inclination angle θ reaches 72.5° (67.5° (boundary value θ_{2#3}) + 5°). On the other hand, when the torch inclination angle θ decreases, the welding condition number is set to "JOB 3" until the torch inclination angle θ reaches 62.5° (67.5° (boundary value θ_{2#3}) - 5°), and to "JOB 2" until the torch inclination angle θ reaches 17.5° (22.5° (boundary value θ_{1#2}) - 5°). Such an arrangement can avoid frequent changes in welding condition numbers due to frequent changes in torch inclination angles θ across a boundary value. When the hysteresis characteristics are provided, it is necessary to impose a limitation on the setting angle of each setting, so that the hysteresis ranges of the settings do not overlap. For example, suppose that the hysteresis range is set to ±5° of a set angle. In this case, if the set angle of setting 2 is "45°", the set angle of setting 3 needs to be larger than "55°". Accordingly, a limitation is imposed such that any angle not larger than "55°" is not accepted as the set angle of setting 3.

Although the present embodiment describes the case where the welding power supply 1 promptly changes the welding condition according to the received welding condition number, the present disclosure is not limited to such. For example, when the welding condition number is changed, the welding power supply 1 may gradually change the welding condition corresponding to the welding condition number before the change to the welding condition corresponding to the welding condition number after the change. That is, the parameter values of the welding condition may be linearly interpolated between the values before change and the values after change, so that the parameter values are gradually changed from the values before change to the values after change. This prevents a sudden change in the welding condition.

In the present embodiment, the torch inclination angle ranges corresponding to the respective settings are set in the welding condition number table. However, these ranges may not need to be set. In this case, the boundary value θ_{1#2} (θ_{1#2}) between torch inclination angle ranges may be calculated from the set angle of each setting.

In the present embodiment, the welding torch 3 is held in a desired posture during the welding information setting process, and the torch inclination angle θ at this point is set to a set angle. However, the present disclosure is not limited to such. Setting of a set angle may be achieved by the operator manually inputting the set angle via an operation using the operation buttons 332.

Although the present embodiment describes the case where all items of the welding condition number table are input during the welding information setting process, the present disclosure is not limited to such. It is possible to select a desired item and input (or change) only the selected item. This allows for individual changes such as changing only the set angle of setting 2 or changing only the welding condition number of setting 3.

Although the present embodiment describes the case where a welding condition number is read and transmitted to the welding power supply 1, the present disclosure is not limited to such. For example, instead of the welding condition numbers, individual parameter values such as welding current set values may be set in the welding condition number table. In this case, a corresponding parameter value may be read based on a torch inclination angle θ and transmitted to the welding power supply 1. The individual parameter values in this case may be welding voltage set values or current rise change rates at the occurrence of short circuit, instead of the welding current set values. Furthermore, for pulse output, parameter values, such as the base current set value of a pulse, a peak current set value, a low-level period, a high-level period, a pulse frequency, the duty ratio of the pulse, the rising and falling slopes of the pulse may be set. For AC output, parameter values, such as an AC frequency and the ratio of the time during which the welding torch is at positive polarity, may be set. It is also possible to set multiple parameter values among the parameters mentioned above. In this case, set parameter values correspond to an example of the "welding information".

According to the present embodiment, the welding condition table, in which the welding conditions are associated with the welding condition numbers, is stored in the storage unit 13 of the welding power supply 1, and the welding torch 3 transmits a welding condition number to the welding power supply 1. However, the present disclosure is not limited to such. The welding condition table may be stored in the storage unit 34 of the welding torch 3. In this case, the welding torch 3 may read a welding condition number from the welding condition number table, read a welding condition from the welding condition table based on the read welding condition number, and transmit the read welding condition (each parameter value) to the welding power supply 1.

Although the present embodiment describes the case where the welding power supply 1 and the wire feeder 2 communicate with each other via the signal line 8, the present disclosure is not limited to such. For example, communication may be performed by superimposing signals on the power cables 41 and 42 or the power transmission line 5. In this case, the signal line 8 for connecting the welding power supply 1 and the wire feeder 2 is unnecessary. Alternatively, the welding power supply 1 and the wire feeder 2 may wirelessly communicate with each other. In this case again, the signal line 8 for connecting the welding power supply 1 and the wire feeder 2 is unnecessary. Alternatively, the welding torch 3 and the welding power supply 1 may wirelessly communicate with each other without the wire feeder 2 therebetween.

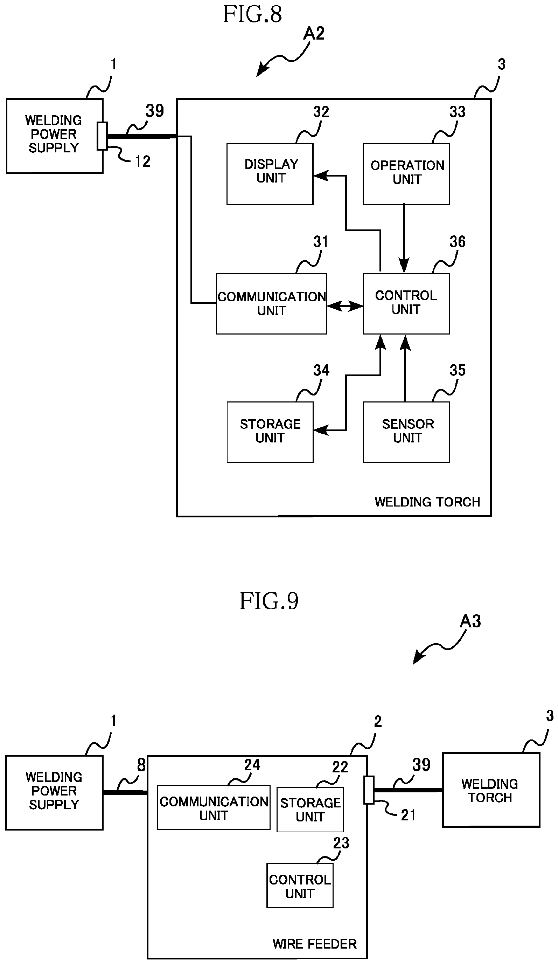

Figs. 8 and 9 show other embodiments of the present disclosure. In these figures, elements that are the same as or similar to those in the first embodiment are denoted by the same reference signs as in the first embodiment, and descriptions thereof are omitted.

Fig. 8 is a block diagram illustrating the functional configuration of a welding system A2 according to a second embodiment.

The welding system A2 shown in Fig. 8 is different from the welding system A1 according to the first embodiment in that the welding system A2 does not include the wire feeder 2. The welding system A2 is a non-consumable electrode welding system that does not use any wire electrodes.

The welding power supply 1 and the welding torch 3 are connected to each other via the torch cable 39. The welding power supply 1 includes a connector 12, which is a recessed connection terminal, for example. The connector 12 receives a projecting torch plug (not shown) provided at an end of the torch cable 39 of the welding torch 3 to connect the welding torch 3 and the wire feeder 1. The connector 12 connects the power cable 41, the gas pipe 7, the power transmission line 5 and the signal line 8 in the welding power supply 1 to the power cable 41, the gas pipe 7, the power transmission line and the signal line in the torch cable 39, respectively.

The second embodiment provides the same advantages as those of the first embodiment.

Fig. 9 is a block diagram illustrating the functional configuration of a welding system A3 according to a third embodiment. In Fig. 9, descriptions of the internal configuration of the welding torch 3 are omitted.

The welding system A3 shown in Fig. 9 is different from the welding system A1 according to the first embodiment in that the welding condition table is stored in a storage unit 22 of the wire feeder 2 and not in the welding power supply 1.

The welding torch 3 transmits, to the wire feeder 2, a welding condition number read from the welding condition number table. A control unit 23 of the wire feeder 2 reads a corresponding welding condition from the welding condition table stored in the storage unit 22, based on the welding condition number inputted from the welding torch 3. Then the control unit 23 transmits the read welding condition to the welding power supply 1 via a communication unit 24. In the present embodiment, the storage unit 22 corresponds to an example of the "feeder storage unit", the control unit 23 corresponds to an example of the "obtaining unit", and the communication unit 24 corresponds to an example of the "feeder communication unit".

The third embodiment provides the same advantages as those of the first embodiment.

The welding torch and the welding system according to the present disclosure is not limited to the foregoing embodiments. The specific configuration of each part of the welding torch and the welding system according to the present disclosure may be varied in many ways.

The present disclosure may include embodiments according to the following clauses.
Clause 1. A welding torch comprising:
   a sensor unit that detects inclination information on the welding torch;
   a storage unit that stores information;
   a welding information setting unit that sets welding information in the storage unit in a manner such that the welding information is in association with the inclination information;
   a welding information obtaining unit that obtains, from the storage unit, the welding information corresponding to the inclination information detected by the sensor unit; and
   a communication unit that transmits the welding information obtained by the welding information obtaining unit to a welding power supply.
Clause 2. The welding torch according to clause 1, wherein the welding information setting unit, when switched to a welding information setting mode, sets the inclination information detected by the sensor unit and welding information selected by an operator in association with each other.
Clause 3. The welding torch according to clause 1 or 2,
   wherein the welding information setting unit sets a plurality of pieces of welding information in association with different pieces of inclination information, and
   the welding information obtaining unit obtains a piece of welding information corresponding to a piece of inclination information that is stored in the storage unit and closest to the inclination information detected by the sensor unit .
Clause 4. The welding torch according to clause 3, wherein in response to a change of the inclination information detected by the sensor unit, the welding information obtaining unit changes the welding information to be obtained in a manner such that the changing of the welding information to be obtained has hysteresis characteristics.
Clause 5. The welding torch according to any one of clauses 1 to 4, wherein the welding information is a welding condition number associated with a predetermined welding condition.
Clause 6. The welding torch according to clause 5,
   wherein the storage unit stores correspondence between the welding condition and the welding condition number, and
   the communication unit transmits the welding condition corresponding to the welding condition number.
Clause 7. A welding system comprising:
   the welding torch according to clause 5; and
   the welding power supply,
   wherein the welding power supply comprises:
      a power supply storage unit that stores correspondence between the welding condition and the welding condition number; and
      an obtaining unit that obtains the welding condition corresponding to the welding condition number received from the welding torch.
Clause 8. A welding system comprising:
   the welding torch according to clause 5;
   a wire feeder that feeds a welding wire to the welding torch; and
   the welding power supply,
   wherein the communication unit transmits the welding condition number to the wire feeder, and
   the wire feeder comprises:
      a feeder storage unit that stores correspondence between the welding condition and the welding condition number;
      an obtaining unit that obtains the welding condition corresponding to the welding condition number received from the welding torch, and
      a feeder communication unit that transmits the welding condition obtained by the obtaining unit to the welding power supply.

## Claims

1. A welding torch comprising:
a sensor unit that detects inclination information on the welding torch;
a storage unit that stores information;
a welding information setting unit that sets welding information in the storage unit in a manner such that the welding information is in association with the inclination information;
a welding information obtaining unit that obtains, from the storage unit, the welding information corresponding to the inclination information detected by the sensor unit; and
a communication unit that transmits the welding information obtained by the welding information obtaining unit to a welding power supply.

2. The welding torch according to claim 1, wherein the welding information setting unit, when switched to a welding information setting mode, sets the inclination information detected by the sensor unit and welding information selected by an operator in association with each other.

3. The welding torch according to claim 1 or 2,
wherein the welding information setting unit sets a plurality of pieces of welding information in association with different pieces of inclination information, and
the welding information obtaining unit obtains a piece of welding information corresponding to a piece of inclination information that is stored in the storage unit and closest to the inclination information detected by the sensor unit.

4. The welding torch according to claim 3, wherein in response to a change of the inclination information detected by the sensor unit, the welding information obtaining unit changes the welding information to be obtained in a manner such that the changing of the welding information to be obtained has hysteresis characteristics.

5. The welding torch according to any one of claims 1 to 4, wherein the welding information is a welding condition number associated with a predetermined welding condition.

6. The welding torch according to claim 5,
wherein the storage unit stores correspondence between the welding condition and the welding condition number, and
the communication unit transmits the welding condition corresponding to the welding condition number.

7. A welding system comprising:
the welding torch according to claim 5; and
the welding power supply,
wherein the welding power supply comprises:
a power supply storage unit that stores correspondence between the welding condition and the welding condition number; and
an obtaining unit that obtains the welding condition corresponding to the welding condition number received from the welding torch.

8. A welding system comprising:
the welding torch according to claim 5;
a wire feeder that feeds a welding wire to the welding torch; and
the welding power supply,
wherein the communication unit transmits the welding condition number to the wire feeder,
the wire feeder comprises:
a feeder storage unit that stores correspondence between the welding condition and the welding condition number;
an obtaining unit that obtains the welding condition corresponding to the welding condition number received from the welding torch, and
a feeder communication unit that transmits the welding condition obtained by the obtaining unit to the welding power supply.
